# EUROPEAN PATENT APPLICATION

(11) **EP 4 633 236 A1**
(43) Date of publication of application: **15.10.2025**
(21) Application number: 24898947.7
(22) Date of filing: 02.08.2024
(51) Int. Cl.: H04W 36/06

(54) **ACCESS POINT DEVICE, TERMINAL DEVICE, AND WIRELESS FREQUENCY HOPPING METHOD**

(30) Priority: 01.03.2024 CN 202410238813
(71) Applicant: Wuhan Haoyiyuan Technology Co., Ltd., Wuhan, Hubei 430074 (CN)
(72) Inventor: LIU, Dezhi, Wuhan, Hubei 430074 (CN); YU, Jiongliang, Wuhan, Hubei 430074 (CN)
(74) Representative: Grünecker Patent- und Rechtsanwälte PartG mbB
(86) International application number: PCT/CN2024/109550
(87) International publication number: WO 2025/179775

(57) **Abstract**

An access point device communicates with a terminal device by using wireless transmission channels, and the access point device includes a first data transmission module and a first channel detection module; the first data transmission module transmits service data and hops to an alternative channel in a case where interference exists on a first channel; in a case where no interference exists on a second channel, the alternative channel is the second channel; the first channel detection module monitors a signal on the second channel to determine whether interference exists on the second channel; in a case where the second channel is a DFS channel, the monitored signals comprise an interfering signal and a radar signal; and after the second channel is used as a new first channel, a target channel is selected as a new second channel to be monitored. The present disclosure further discloses a terminal device, a frequency hopping method of wireless transmission channels, etc., which can avoid the delay impact of monitoring radar signals on transmitting service data during channel hopping.

## Description

### TECHNICAL FIELD

The present disclosure relates to wireless frequency hopping technologies, and in particular, to an access point device, a terminal device, a frequency hopping method of wireless transmission channels, a storage medium, and a computer program product.

### BACKGROUND

Since wireless channels are sensitive to environmental interference, the bit error rate of transmitting service data easily increases. When a wireless device detects that interference exists on an operating channel, the wireless device usually needs to hop to another idle channel where no interference exists, to ensure transmission quality of the service data.

A dynamic frequency selection (DFS) regulation allows unlicensed wireless devices to share a 5GHZ frequency band allocated to a radar system without causing interference to the radar, and this regulation enables a wireless device with a DFS function to transmit service data by using a DFS channel.

Under the constraint of the DFS regulations, when a wireless device switches to a DFS channel, the DFS regulations require a radar signal detection to be performed within a stipulated detection time, where the stipulated time is referred to as a Channel Availability Check (CAC) period, and a CAC period stipulated by the DFS regulations is at least 60s. Within the CAC period, the wireless device can only receive a signal and cannot transmit a signal, and if no radar signals exist within the entire CAC period, the wireless device can then transmit service data, thereby greatly affecting timeliness of wireless communication. In addition, the DFS regulations further specify that when a wireless device is on a DFS channel, regardless of whether the wireless device is currently within a CAC period, as long as it is detected that a radar signal exists on the channel, the wireless device needs to randomly hop to another idle channel, to avoid affecting communication of the radar device. If it happens to randomly hop to another DFS channel, radar signal detection of at least 60 seconds needs to be started, which further deteriorates the timeliness of wireless communication, and therefore, the wireless device usually preferentially selects to operate on a non-DFS channel, but a non-DFS channel is susceptible to the influence of other devices in the environment.

### SUMMARY

In view of this, the present disclosure provides an access point device, a terminal device, a frequency hopping method of wireless transmission channels, a storage medium, and a computer program product.

The first aspect of the present disclosure provides an access point device, configured to communicate with a terminal device by using wireless transmission channels, where the access point device includes a first data transmission module and a first channel detection module; the wireless transmission channels include a first channel and a second channel, the first channel is a channel occupied by the first data transmission module, the second channel is a channel occupied by the first channel detection module, and the first channel and the second channel are channels different in frequency;
the first data transmission module is configured to transmit service data and hop to an alternative channel in a case where interference exists on the first channel, to use the alternative channel as a new first channel; where whether interference exists on the first channel is determined based on: a transmission quality assessment metric of the service data of the first channel, an interfering signal, and/or a radar signal; and in a case where no interference exists on the second channel, the alternative channel is the second channel; and
the first channel detection module is configured to: monitor signals of the second channel to determine whether interference exists on the second channel, where in a case where the second channel is a DFS channel, the monitored signals include an interfering signal and a radar signal; and after the second channel is used as the new first channel, select a target channel as a new second channel to be monitored, where both the DFS channel and the target channel are selected based on channel quality of each channel in a channel set capable of transmitting the service data.

The second aspect of the present disclosure provides a terminal device, including a second data transmission module, configured to transmit the service data with the first data transmission module through the first channel in the access point device of the first aspect; and transmit service data through a new first channel after the first channel is switched to the new first channel.

The third aspect of the present disclosure provides a frequency hopping method of wireless transmission channels, where the wireless transmission channels are configured to implement communication between an access point device and a terminal device, and the method includes steps of:
determining, by the access point device, whether interference exists on a first channel based on: a transmission quality assessment metric of service data transmitted by the first channel, an interfering signal, and/or a radar signal;
monitoring, by the access point device, a signal on a second channel, determining whether interference exists on the second channel, and in a case where the second channel is a DFS channel, determining whether interference exists on the second channel based on an interfering signal and a radar signal detected on the second channel;
hopping to an alternative channel in a case where interference exists on the first channel, to use the alternative channel as a new first channel, and in a case where no interference exists on the second channel, the alternative channel is the second channel; and
after the second channel is used as the new first channel, selecting, by the access point device, a target channel as a new second channel to be monitored, where both the DFS channel and the target channel are selected based on channel quality of each channel in a channel set capable of transmitting the service data.

The fourth aspect of the present disclosure provides a computer program product, including a computer program/instructions, where the computer program/instructions, when executed, implements the method according to the third aspect.

The fifth aspect of the present disclosure provides a computer-readable storage medium storing a computer program, where the program, when executed, implements the method according to the third aspect.

In the examples of the various aspects provided by the present disclosure, since the radar signal and the interfering signal are monitored specifically for a channel on which no service data is transmitted, and based on the monitored signal, the channel is used as the preferred channel of frequency hopping in the case where no interference exists, since the channel has already undergone radar signal monitoring for a CAC period, even if the channel is a DFS channel, there is no need to enter the radar monitoring within the CAC period when hopping from the first channel to the channel, thereby avoiding the problem that service data cannot be transmitted immediately after hopping to the DFS channel.
It should be understood that, both the foregoing general description and the following detailed description are exemplary and explanatory only and are not restrictive of the present disclosure.

### BRIEF DESCRIPTION OF DRAWINGS

The accompanying drawings are incorporated in the description and constitute a part of this disclosure, illustrate examples consistent with the present disclosure, and together with the description, serve to explain the principles of the present disclosure.
FIG. 1 is a partial flowchart of a method of implementing wireless channel hopping according to some examples.
FIG. 2 shows a flow related to a first channel in a working procedure of an access point device according to some examples.
FIG. 3 is a partial flowchart of monitoring a second channel according to some examples.
FIG. 4a and FIG. 4b are schematic structure diagrams of an access point device according to some examples.
FIG. 5a and FIG. 5b are schematic structure diagrams of a terminal device according to some examples.
FIG. 6 is a system block diagram of interaction between an access point device and a terminal device in an application scenario.
FIG. 7 is a signaling interaction diagram of an access point device and a terminal device in the application scenario in FIG. 6.
FIG. 8 is another signaling interaction diagram of an access point device and a terminal device in the application scenario in FIG. 6.
FIG. 9 is a hardware structure diagram of a computer device, according to some examples.

### DETAILED DESCRIPTION

Wireless communication systems utilize electromagnetic waves to transmit information, which allows data to be transferred between devices without a physical connection. A wireless channel refers to a path of electromagnetic waves from a transmitting source to a receiving end. This path may include air, buildings, terrain, etc., all of which may become interference affecting the propagation of radio waves, and in addition, in the wireless channel, there may be interference which come from other wireless devices, such as nearby wireless networks, electronic devices, or natural phenomena.

An access point (AP) device may connect a wireless device to a wired network, serve as a relay station for wireless communication, and convert a wired network signal into a wireless signal, so that a wireless terminal device (e.g., a notebook computer, a smartphone, or a tablet computer) can access the wired network in a wireless manner.

Regardless of the access point device or the terminal device, these wireless devices usually include a processor, a wireless communication module, and an antenna. The wireless communication module is responsible for modulating data generated by the processor into a wireless signal, transmitting the wireless signal through the antenna, and demodulating a wireless signal received by the antenna into original data to be processed by the processor.

Most wireless devices perform interference detection on all channels during startup, and automatically select a channel with best channel quality from a supported channel list as an operating channel.

The wireless communication module may switch to a channel with relatively low interference based on a circumstance of signal interference, to ensure communication quality. A frequency hopping technology is involved in channel switching, and the frequency hopping technology implements signal transmission by changing a radio transmission frequency according to a certain mode within a predetermined time interval. Such techniques may improve security and anti-interference capability of communications.

Some wireless devices have a capability of detecting interference in real time. Although these wireless devices can monitor an interfering signal in real time, when selecting an operating channel, basically, a manner of not using a DFS channel or preferentially using a non-DFS channel is adopted, and the DFS channel is usually less susceptible to the interfering signal than the non-DFS channel, so this channel selection manner cannot effectively use DFS channel resources. Even if some wireless devices choose to use the DFS channel in some cases, the CAC detection specified in the DFS regulations cannot be circumvented when switching to the DFS channel.

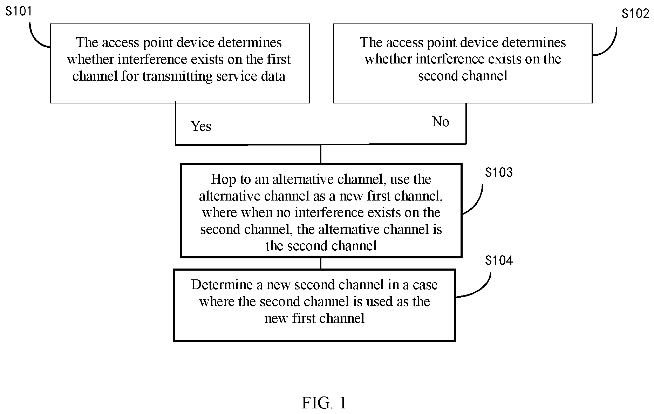

Different from a conventional frequency hopping manner, the present disclosure provides a solution that can circumvent CAC detection during frequency hopping. FIG. 1 is a partial flowchart of a method of implementing wireless channel hopping according to an example.

In this example, different channel switching capabilities are designed for the access point device and the terminal device, and CAC period is circumvented by using a switching policy for the access point device.

A channel on which the access point device transmits service data is referred to as a first channel below. If interference exists on the first channel, it is required to perform frequency hopping to switch to another idle channel. In order to eliminate the need to wait for CAC period for radar signal detection when frequency hopping is performed to switch from the first channel to another idle channel, the access point device specifically further occupies an idle channel to monitor interfering signals and radar signals, and the occupied idle channel is not used to transmit service data, which is referred to as a second channel; if no interference exists on the second channel, the second channel is used as an alternative channel. When the frequency hopping is performed on the first channel, it is preferable to hop to the alternative channel; since radar signal monitoring has been continuously performed on the second channel, a constraint of CAC period of a DFS regulation is met, so that the access point device can transmit service data without performing radar signal monitoring for a CAC period after hopping from the first channel to the second channel.

In this example, whether interference exists on the first channel may be determined based on one or more dimensions such as transmission quality of service data, a value of a detected interfering signal on the first channel, and whether a radar signal is detected. For example, if the first channel is a non-DFS channel, the radar signal may not be monitored, and if the first channel is a DFS channel, whether a radar signal exists on the first channel needs to be monitored, so as to avoid affecting normal operation of the radar device. The transmission quality of the service data may be evaluated by one or more transmission quality assessment metrics selected from a plurality of transmission quality assessment metrics based on an actual design need, and the transmission quality assessment metrics may be, for example, a packet loss rate, a received signal strength indicator (RSSI) value, and a channel load (chanload) value for transmitting the service data through the first channel. The packet loss rate is packet loss rate data of a channel used by the terminal device to receive the service data. RSSI is a metric for measuring wireless signal strength, i.e., signal strength of a signal received by a terminal device which is transmitted by an access point device, to be used for determining whether a packet loss rate is abnormal due to an excessively long distance between the terminal device and the access point device. Chanload represents real-time interference and load of the current operating channel of the access point device.

This example is designed to implement the following steps through an access point device.

In S101, the access point device determines whether interference exists on a first channel based on: a transmission quality assessment metric of the transmitted service data of the first channel, an interfering signal, and/or a radar signal.

In S102, the access point device monitors a signal of a second channel, determines whether interference exists on the second channel, and in a case where the second channel is a DFS channel, determines whether interference exists on the second channel based on an interfering signal and a radar signal detected on the second channel.

In S103, by hopping to an alternative channel in a case where interference exists on the first channel, the alternative channel is used as a new first channel, and in a case where no interference exists on the second channel, the alternative channel is the second channel.

In S104, after the second channel is used as the new first channel, the access point device selects a target channel as a new second channel to be monitored, where both the DFS channel and the target channel are selected based on channel quality of each channel in a channel set capable of transmitting the service data.

When the access point device powers up, in order to enter a service data transmission state in time, a non-DFS channel may be selected as the first channel based on channel quality of each channel in a channel set capable of transmitting service data. Of course, this is merely an example, and does not specifically exclude a case in which the first channel selected when the access point device powers up is a DFS channel.

As an example, in step S101, a plurality of transmission quality assessment metrics may be separately monitored for abnormality, and after detecting that each transmission quality assessment metric is abnormal, a quantity of abnormal occurrences is counted; and when the quantity of counted occurrences reaches a predetermined value, the access point device determines that interference exists on the first channel. In this example, interference determination is not performed immediately when any transmission quality assessment metric becomes abnormal, which is intended to avoid a scenario of instantaneous interference as much as possible (for example, a packet loss rate is excessively high due to an instantaneous environment change). However, it is worth pointing out that, this is only an example, and the designer may adjust the monitoring mode according to actual needs, for example, the monitoring mode is designed to consider that a transmission quality problem occurs as long as the quantity of counted occurrences for any metric reaches a threshold or one time of abnormality was detected in all of a plurality of metrics.

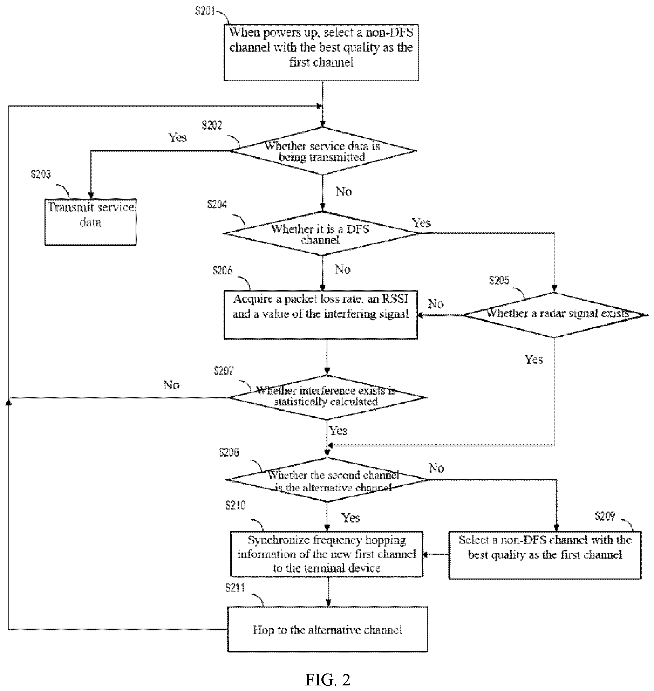

FIG. 2 shows some steps related to the first channel in a working procedure of the access point device in an example, and a process of determining whether interference exists on the first channel may be understood with reference to the steps in FIG. 2, but it should be noted that, the process is merely one manner of determining whether interference exists on the first channel, and an execution sequence of the steps and an increase/decrease and a variation of the steps may be determined based on an actual need of a designer.

In S201, the access point device powers up, and selects a non-DFS channel with best quality from a channel set capable of transmitting service data as the first channel.

In S202, whether service data is being transmitted is determined; if the service data is being transmitted, the service data continues to be transmitted (S203); and if the service data is not being transmitted, whether the first channel is a DFS channel is determined (S204).

When the first channel is a DFS channel, monitoring is performed and whether a radar signal exists is determined (S205); if no radar signals are detected, step S206 is performed; if a radar signal is detected, whether a second channel is an alternative channel is determined (S208); if the second channel is an alternative channel, frequency hopping information of a new first channel is synchronized to the terminal device (S210); if the second channel is not an alternative channel, a non-DFS channel with best quality in a channel set capable of transmitting service data is selected as an alternative channel (S209), and step S210 is performed; and after step S210 is performed, frequency hopping is performed to hop to the alternative channel as a new first channel (S211), and step S202 is performed.

When the first channel is a non-DFS channel, the packet loss rate, the RSSI value, the interference value of the interfering signal, etc., of the first channel are acquired (S206); whether interference exists on the first channel is statistically calculated (S207); if interference exists, step S208 is performed; and if no interference exists, step S202 is performed.

An execution sequence of S101 and S102 is not fixed. It may be understood that, the second channel may be continuously monitored, and as an example, the access point device may select a channel with the best quality from a channel set capable of transmitting service data for continuous monitoring (of course, it is not excluded that the selected channel is not a channel with the best quality, but the designer considers that the channel may meet the quality requirement of service data transmission), and since the DFS channels usually have less interference, the second channel is a DFS channel in many cases. Of course, in some cases, the second channel is also a non-DFS channel.

The difference between the alternative channel and other channels may be distinguished by marking the second channel. If an interference or radar signal is detected after the second channel is marked as the alternative channel, the alternative channel mark is cleared first, and then a channel with best channel quality is reselected for continuous monitoring.

The set of channels capable of transmitting service data may be stored in a list, and a mark indicating that a channel may be used as an alternative channel may also be stored in the list, and a currently required channel may be selected when the access point device accesses the list. If the second channel is used as the new first channel when S103 is performed, the alternative channel mark is first cleared, and then a channel with best channel quality is reselected as a new second channel for continuous monitoring, so as to reselect a new alternative channel.

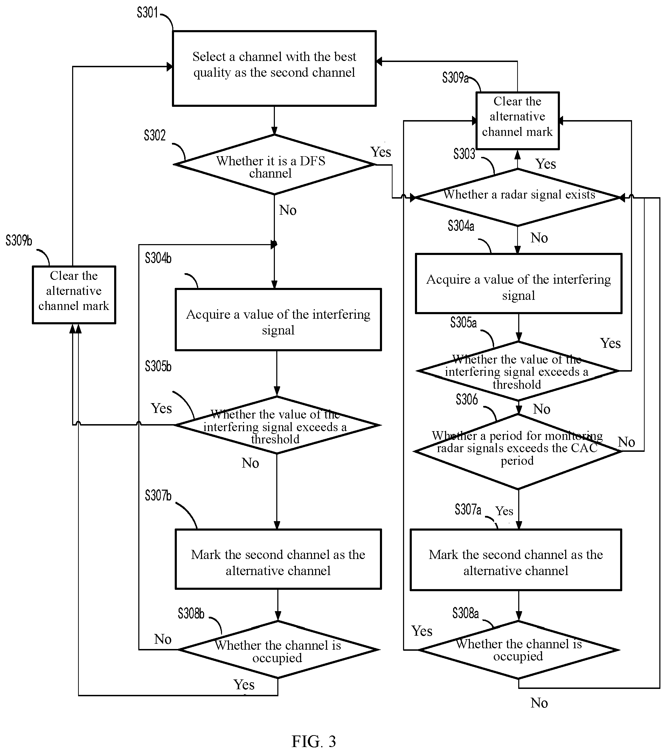

The monitoring processing procedures when the DFS channel and the non-DFS channel are used as the second channel may be different, and may be illustrated by the example in FIG. 3. It should still be noted that, the example in FIG. 3 is not the only implementation, and different procedure designs may be performed according to needs of a designer.

The access point device selects, from a channel set capable of transmitting service data, a channel with best quality as a second channel to be monitored (S301), and determines whether the second channel is a DFS channel (S302). When the monitored channel is a DFS channel, in addition to detecting interference signals, radar signal detection is additionally needed. Whether interference exists is determined based on whether a radar signal is detected within the CAC period and based on a value of the detected interfering signal. As shown in FIG. 3, in order to satisfy the constraint of monitoring the radar signal within the CAC period, after starting to monitor the second channel, a radar signal is monitored in real time to determine whether a radar signal exists on the second channel (S303), if no radar signals are detected, a value of the current interfering signal of the second channel is acquired (S304a), whether the value of the interfering signal exceeds the threshold is determined (S305a), the time of the radar signal monitoring is accumulated and whether the accumulated time exceeds the CAC period is determined (S306), if the CAC period is not exceeded, step S303 of monitoring a radar signal continues to be performed, and if the value of the interfering signal does not reach the threshold and the period during which monitoring of a radar signal is continued but no radar signal has been detected reaches the length of the CAC period, it is determined that no interference exists on the second channel, and the second channel is used as an alternative channel (S307a). At this time, in a manner of marking the second channel, the second channel may be marked as an alternative channel. If the determination result of step S303 is that a radar signal is detected, the mark of the alternative channel is cleared (S309a). Since a channel on which a radar signal has been detected cannot be reused within at least 30 minutes as required by the DFS regulations, as an example, the channel may be further marked as having a radar signal, to avoid being reselected within a time required by the DFS regulations. Regardless of whether the radar signal is detected or the value of the interfering signal acquired in S304a reaches the threshold, it is considered that interference exists on the second channel, then after S309a is performed, the process returns to S301, in which a channel with best channel quality is reselected from the list of channels capable of transmitting service data for continuous monitoring.

In a case where the second channel is a non-DFS channel, whether interference exists is determined based on a detected interfering signal. Still referring to FIG. 3, a value of a current interfering signal of the second channel may be acquired (S304b); whether the value of the interfering signal exceeds a threshold is determined (S305b); if the acquired value of the interfering signal reaches the threshold, it is considered that interference exists on the second channel, after S309b is performed to clear the alternative channel mark, the process returns to S301, in which a channel with best channel quality is reselected from the channel set capable of transmitting service data for continuous monitoring. If no interfering signal is detected or the value of the interfering signal does not reach the threshold, the channel is marked as an alternative channel, and the alternative channel is continuously monitored (S307b).

After being marked as the alternative channel, the second channel, as the alternative channel, may be occupied by the first channel at any time, so it is necessary to determine whether the second channel is occupied (S308a); after the second channel, as the alternative channel, is occupied by the first channel, and after S309b is performed again, step S301 is performed again.

In order to enable normal communication with the terminal device after frequency hopping, the access point device may, before frequency hopping, synchronize the frequency hopping information carrying the new first channel to the terminal device. The designer of the present disclosure considers that the transmission quality may be affected due to the interference on the current first channel, therefore, before taking the alternative channel as the new first channel, the access point device notifies the terminal device of the frequency hopping information carrying the alternative channel through a dedicated channel (hereinafter referred to as a third channel) and the first channel, respectively, where the dedicated channel is different in frequency from the first channel and the second channel, so that the terminal device can hop to the new first channel in time to transmit the service data. It is worth pointing out that, this is not the only way to synchronize the frequency hopping information to the terminal device, for example, the designer may design to transmit the frequency hopping information through one of the first channel or the third channel.

In addition, since the access point device is tasked with monitoring in real time whether interference exists on the second channel and monitoring interfering signals on the first channel when the first channel is not transmitting service data. The present disclosure further designs the terminal device to have the following functions: monitoring channel quality of each channel in a channel set capable of transmitting service data, and transmitting a monitoring result to the access point device. In this way, when the second channel cannot be used as an alternative channel, the access point device selects an alternative channel based on the monitoring result of the terminal device. In an example, in order to enter a state of service data transmission immediately after frequency hopping, in a case where interference exists on the second channel, the selected alternative channel is a non-DFS channel.

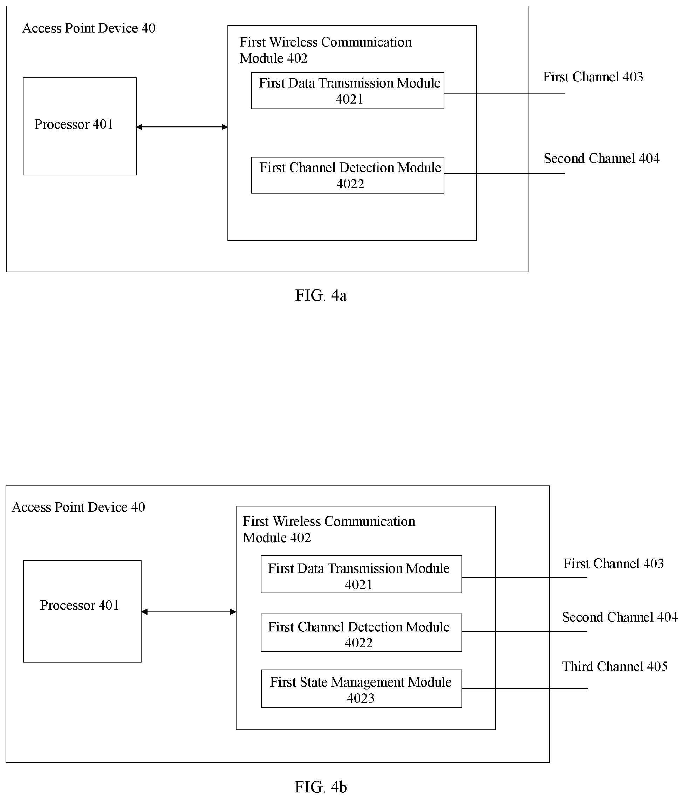

For the method of performing wireless frequency hopping by using an access point device shown in FIG. 1, FIG. 4a is a schematic structure diagram of an access point device.

In the present disclosure, the access point device 40 is designed to include a first data transmission module 4021 and a first channel detection module 4022; the first data transmission module 4021 and the first channel detection module 4022 are usually integrated in a first wireless communication module 402, and the first wireless communication module 402 needs to perform information interaction with a processor 401 inside the access point device 40.

The first data transmission module 4021 transmits service data by using a first channel 403, hops to an alternative channel in a case where interference exists on the first channel 403, and uses the alternative channel as a new first channel; and in a case where interference does not exist on the second channel 404, the second channel 404 is the alternative channel.

The first channel detection module 4022 monitors a signal of a second channel 404, and determines whether interference exists on the second channel 404; and the second channel 404 is selected based on channel quality of each channel in a channel set capable of transmitting service data, for example, which may be a channel with best quality. Since DFS channels typically have less interference, the second channel 404 is a DFS channel in most cases. In a case where the second channel 404 is a DFS channel, the monitored signals include an interfering signal and a radar signal; for an example of determining whether interference exists on the second channel 404, reference may be made to FIG. 3 and the above text content corresponding to FIG. 3. After the second channel 404 is used as a new first channel, a target channel is selected as a new second channel to be monitored; the target channel is also selected based on channel quality of each channel in the channel set supported by the first data transmission module 4021, and similarly, a channel with best quality may be selected as the second channel 404.

However, it is worth pointing out that, if a designer has a personalized requirement, the possibility is not excluded that a channel whose quality is not the best is used as the foregoing first channel, alternative channel, and target channel.

As an example, the alternative channel mark, in addition to being stored in a channel table, may also be stored in the first channel detection module 4022, and in addition, as long as the storage manner allows acquisition of the alternative channel mark, the implementation of the present disclosure is not affected.

In an example, the access point device 40 may further include a first state management module 4023. At this time, a structure diagram of the access point device 40 may refer to FIG. 4b. The first state management module 4023 may be responsible for the interaction of management data and control data other than service data, such as connection state, bit error rate related information, signal strength (RSSI), and synchronization information for operating channels of the access point and the terminal. The state management module may occupy a third channel 405 as the operating channel.

In order to reduce impact on service data transmission performed by the first data transmission module 4021, the first state management module 4023 may perform several procedures of determining whether interference exists on the first channel 403, for example, the first state management module 4023 acquires an interfering signal of the first channel 403 detected by the first data transmission module 4021 and a transmission quality assessment metric (for example, which may be a packet loss rate, an RSSI, a chanload, etc., returned by the terminal device) of the first channel 403, to determine whether interference exists on the first channel 403. In an example, these quality assessment metrics may be a statistical result, from the terminal device, of transmission quality assessment metrics for the service data transmitted by the first channel 403. In addition, once detecting a radar signal that exists on the first channel 403, the first data transmission module 4021 also determines that interference exists on the first channel 403.

As an example, in a case where interference exists on the first channel 403, a manner in which the first data transmission module 4021 acquires the alternative channel may be that, no matter which one of the first data transmission module 4021 or the first state management module 4023 first determines that interference exists on the first channel 403, an alternative channel is first acquired from the first channel detection module 4022 (or locations at which an alternative channel mark is stored, such as a channel table). For example, if the first data transmission module 4021 detects a radar signal on the first channel 403, the alternative channel is acquired from the first channel detection module 4022; and when the determination result of the first state management module 4023 by referring to a value of an interfering signal and transmission quality assessment metrics, represents that interference exists on the first channel 403, the alternative channel is acquired from the first channel detection module 4022 and then forwarded to the first data transmission module 4021. If the first data transmission module 4021 and the first state management module 4023 fail to acquire the alternative channel from the first channel detection module 4022 (e.g., interference exists on the second channel), a non-DFS channel with the best quality is acquired from the first state management module 4023 (e.g., the first state management module 4023 may notify the monitoring result of the terminal device to the first data transmission module 4021).

It is worth pointing out that, the example herein is not the only working procedure of acquiring the alternative channel, and the manner of acquiring the alternative channel may also be that the first state management module 4023 acquires the alternative channel from the first channel detection module 4022 in any case, and then forwards the alternative channel to the first data transmission module 4021; or may be that the first data transmission module 4021 acquires the alternative channel from the first channel detection module 4022 after the first data transmission module 4021 detects a radar signal or learns the determination result of the first state management module 4023 for the interference on the first channel. Various possible manners are not listed one by one again.

In addition, the first state management module 4023 may be further responsible for notifying the terminal device of frequency hopping information carrying the alternative channel before the first data transmission module 4021 performs frequency hopping. Since the first state management module 4023 and the first data transmission module 4021 respectively occupy the third channel 405 and the first channel 403 that are different in frequency, the process of synchronizing the frequency hopping information can be more guaranteed and not easily affected by the interference of the first channel 403.

The first channel detection module 4022 may implement a process of determining whether interference exists on the second channel 404 with reference to various examples described above in the frequency hopping process of the access point device. For example, in a case where the second channel 404 is a non-DFS channel, whether interference exists is determined based on a detected interfering signal; and in a case where the second channel 404 is a DFS channel, whether interference exists is determined based on whether a radar signal is detected within a CAC period, and based on a detected interfering signal. Details are not described herein again.

The first data transmission module 4021 may further select the first channel 403 when the access point device powers up, and in a case where interference exists on the second channel 404, select another alternative channel other than the second channel 404, as described above, and details are not described herein again.

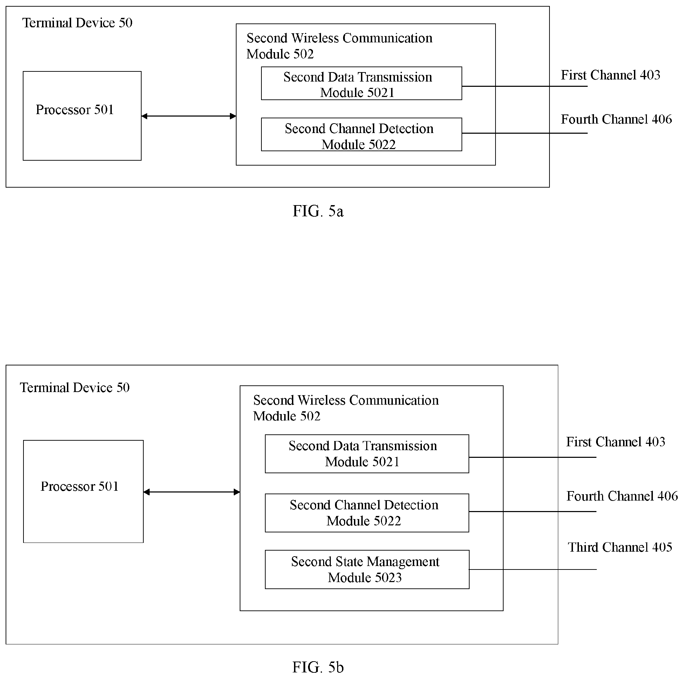

In order to cooperate with the foregoing functions designed for the access point device, the present disclosure provides a design solution of a terminal device, referring to FIG. 5a.

The terminal device 50 may include a second data transmission module 5021, where the second data transmission module 5021 and the first data transmission module 4021 share the first channel 403 to transmit service data; and after a switch from the first channel 403 to a new first channel, the service data is transmitted through the new first channel. The second data transmission module 5021 and a second channel detection module 5022 are usually integrated in a second wireless communication module 502, and the second wireless communication module 502 needs to perform information interaction with a processor 501 inside the terminal device 50.

In addition, as shown in FIG. 5b, the terminal device may further include a second channel detection module 5022. A channel occupied by the second channel detection module 5022 is referred to as a fourth channel 406, and the fourth channel 406 is different in frequency from both the first channel 403 and the third channel 405. On the fourth channel 406, the second channel detection module 5022 monitors channel quality of each channel in a channel set capable of transmitting service data, and transmits a monitoring result to the access point device 40. As an example, since the first channel detection module 4022 and the second channel detection module 5022 do not need to transmit a signal, but monitor whether interference of signals exists on an occupied channel, the fourth channel 406 may be a channel with the same frequency as the second channel 404, or may be a channel with a different frequency.

The terminal device 50 may be designed with a second state management module 5023, which shares the third channel 405 with the first state management module 4023 and may also be responsible for the interaction of management data and control data other than service data, such as connection state, bit error rate related information, signal strength (RSSI), and synchronization information of operating channels between the access point and the terminal. As an example, the second data transmission module 5021 may further perform statistics on the real-time bit error rate related information of the first channel 403 and the RSSI of the service data from the access point, and notify the second state management module 5023 of the statistical result, which is transmitted by the second state management module 5023 to the first state management module 4023 through the third channel 405. Similarly, a monitoring result of each channel transmitted by the second channel detection module 5022 to the access point device 40 may also be transmitted by the second state management module 5023 to the first state management module 4023 through the third channel 405. In addition, the channel information of the first channel occupied by the first data transmission module 4021 may also be synchronized by the first state management module 4023 and the second state management module to the second data transmission module 5021.

The implementation of the procedure of the access point device, the structure of the access point device designed to implement the function of the access point device, and the structure of the terminal device in the foregoing examples are not limited to the foregoing limited examples. The following further lists another example of an interaction process between an access point device and a terminal device in an actual application scenario, and the example is merely a specific example that can resolve the technical problem of the present disclosure, and should not be understood as the only example that resolves the technical problem of the present disclosure.

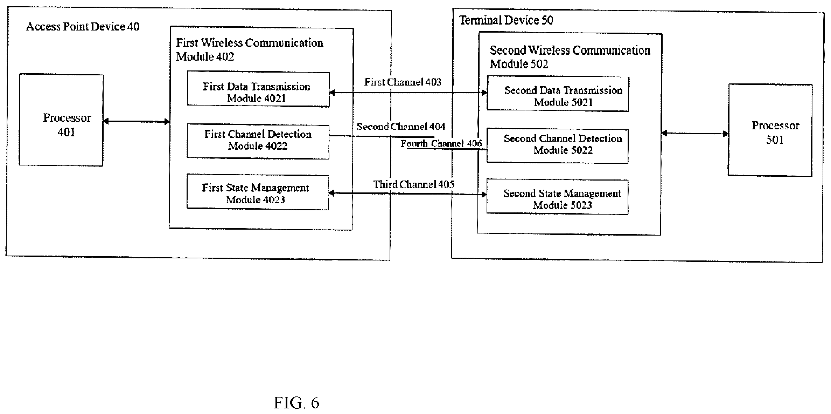

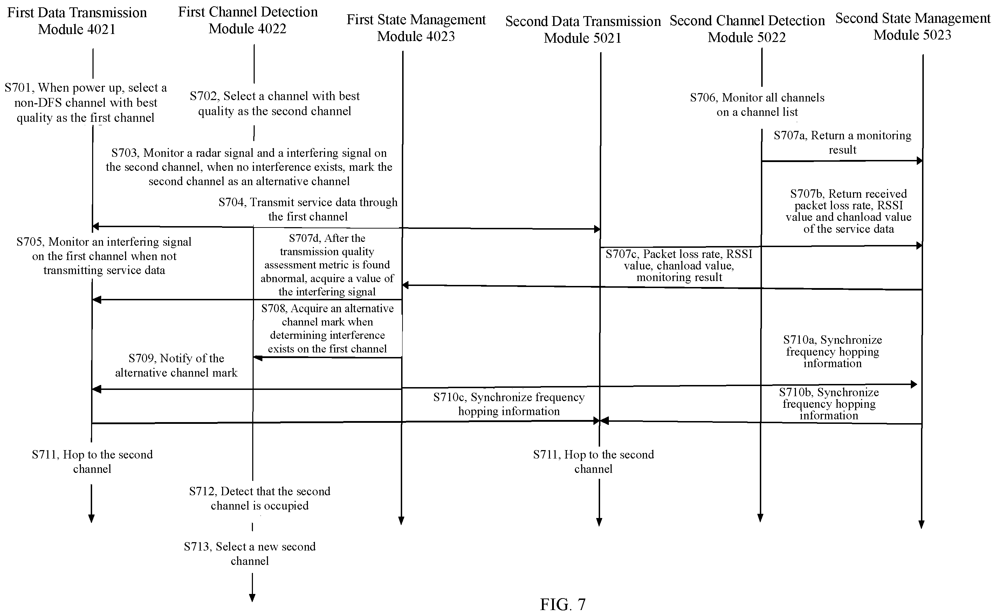

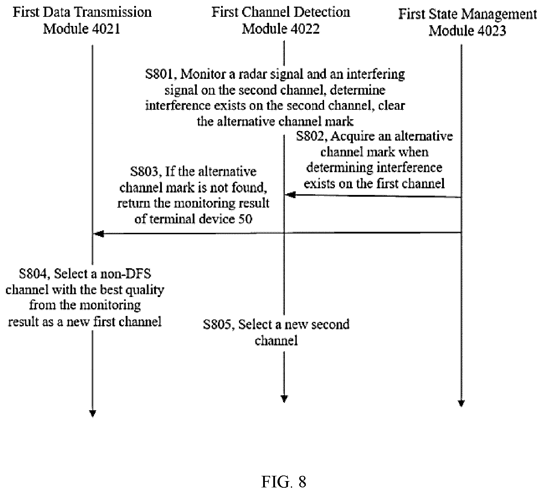

As shown in FIG. 6, the devices in the wireless transmission system include an access point device 40 and a terminal device 50, both of which communicate through a wireless channel, and the first wireless communication module 402 of the access point device 40 is designed to include at least three modules: a first data transmission module 4021, a first channel detection module 4022, and a first state management module 4023 in the figure; and the second wireless communication module 502 of the terminal device 50 is designed to include at least a second data transmission module 5021, a second channel detection module 5022 and a second state management module 5023. The first data transmission module 4021 and the second data transmission module 5021 share the first channel 403, and the first channel 403 is a channel for transmitting service data. The first state management module 4023 and the second state management module 5023 share the third channel 405, the first channel detection module 4022 uses the second channel 404 as an object of real-time monitoring, and the second channel detection module 5022 occupies the fourth channel 406 to monitor all channels capable of transmitting service data. The specific process refers to the signaling interaction processes in FIG. 7 and FIG. 8.

FIG. 7 illustrates the working procedure of the second channel 404 without interference.

In S701, when the access point device powers up, the first data transmission module 4021 performs full channel scanning, and selects a non-DFS channel with best quality from a channel list as the first channel 403, where the channel list records all channels that support service data transmission.

In S702, the first channel detection module 4022 selects a channel with best quality from the channel list as the second channel 404, where the channel is usually a DFS channel.

In S703, the first channel detection module 4022 monitors a radar signal and interfering signal, and if the period during which the monitoring of a radar signal is continued and no radar signal has been detected reaches the length the CAC period, and a value of the interfering signal does not reach a threshold, the first channel detection module 4022 marks the second channel 404 as an alternative channel. If a radar signal is detected, the second channel is marked as having a radar signal, and a new channel with the best quality is re-acquired from the channel table as a new second channel; if the value of the detected interfering signal exceeds the threshold, a new channel with the best quality also needs to be re-acquired from the channel table as a new second channel; and in particular, if the second channel 404 has been marked as the alternative channel at this time, the alternative channel mark is cleared.

In S704, after establishing a connection with the second data transmission module 5021, the first data transmission module 4021 transmits service data with the second data transmission module 5021 through the first channel 403.

In S705, the first data transmission module 4021 further needs to monitor an interfering signal of the first channel 403 when no service data is transmitted.

In S706, the second channel detection module 5022 occupies the fourth channel 406 as an operating channel, monitors all channels in the channel list, and transmits a monitoring result to the second state management module 5023 (S707a); and in addition, the second state management module 5023 also acquires an assessment metric related to service data transmission quality of the second data transmission module 5021 (S707b), e.g., a packet loss rate, an RSSI value, a chanload value, etc., and transmits the monitoring result and the transmission quality assessment metrics to the first state management module 4023 through the third channel 405 (S707c).

In S707d, the first state management module 4023 acquires the interfering signal detected by the first data transmission module 4021 in S705 when evaluating, according to the assessment metric returned by the second state management module 5023, situations where interference may exist, such as an excessively high packet loss rate.

In S708, if a result determined based on the value of the interfering signal in combination with the transmission quality assessment metric indicates that interference exists on the first channel 403, a mark of the second channel 404 is acquired from the first channel detection module 4022.

In S709, if the second channel 404 is marked as an alternative channel, it is notified to hop to the second channel 404 from the first channel 403; or if the second channel 404 is marked as having a radar signal or the alternative channel mark of the second channel 404 is cleared by the first channel detection module 4022 due to having an interfering signal, the first data transmission module 4021 is notified to select a non-DFS channel with best quality from a channel monitoring result received by the terminal device 50 as an alternative channel (not shown in the figure).

In S710, the first data transmission module 4021 and the first state management module 4023 respectively synchronize frequency hopping information of the new first channel to the terminal device 50 by using the respective operating channels, i.e., the frequency hopping information may be transmitted to the second data transmission module 5021 by using the first channel 403 (S710c), may be first transmitted to the second state management module 5023 by using the third channel 405 (S710a), and then synchronized by the second state management module 5023 to the second data transmission module 5021 (S710b).

In S711, after the first data transmission module 4021 hops to the second channel 404, since the second channel 404 is a DFS channel but has been monitored for a radar signal for a long time, the first data transmission module 4021 may directly enter a service data transmission procedure without being constrained by a CAC period. For DFS channels, both the interfering signal and the radar signal may be causes of interference to the new first channel, so the first data transmission module 4021 needs to monitor both interfering signals and radar signals, and once a radar signal is detected, the alternative channel is acquired from the first channel detection module 4022.

After detecting that the second channel is occupied (S712), the first channel detection module 4022 selects an optimal unoccupied channel from the channel list as a new second channel to be monitored (S713).

The following describes a working procedure when interference exists on the second channel 404 with reference to FIG. 8, and some steps that are duplicated to those in FIG. 7, not shown in the figure, may refer to the corresponding steps in FIG. 7.

In S801, when the first channel detection module 4022 detects that interference exists on the second channel, whether the second channel has been marked with the alternative channel mark is determined; if the second channel has been marked with the alternative channel mark, the mark needs to be cleared, and then a new second channel is selected from the channel list (S805).

In S802, when the first state management module 4023 determines that interference exists on the first channel 403, the first state management module 4023 acquires a mark of an alternative channel.

In S803, if the first state management module 4023 does not find the alternative channel mark, the first state management module 4023 returns the monitoring result returned by the second state management module 5023 to the first data transmission module 4021.

In S804, the first data transmission module 4021 selects a non-DFS channel with best quality from the monitoring result as a new first channel, to avoid that service data cannot be transmitted within CAC period after a channel is switched.

After switching to a non-DFS channel, the working processes of each module may refer to the steps described in FIG. 7 and FIG. 8, which are not be repeated again.

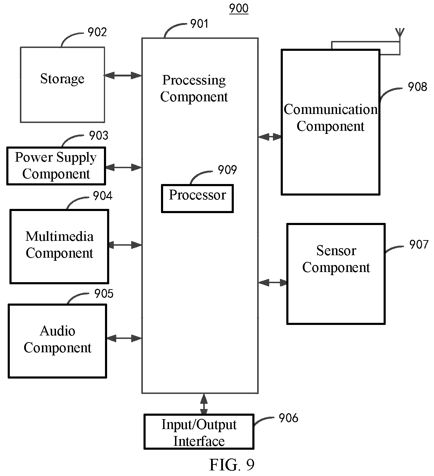

The hardware constitution of the access point device 40 and the terminal device 50 provided in the present disclosure may refer to FIG. 9, which illustratively shows a hardware diagram. For example, the device 900 may be a mobile phone, a computer, a digital broadcast terminal, a messaging device, a gaming console, a tablet, a medical device, exercise equipment, a personal digital assistant, a router, etc.

The device 900 may include one or more of the following components: a processing component 901, a storage 902, a power supply component 903, a multimedia component 904, an audio component 905, an input/output (I/O) interface 906, a sensor component 907, and a communication component 908.

The processing component 901 typically controls overall operations of the device 900, such as the operations associated with display, telephone calls, data communications, camera operations, and recording operations. The processing component 901 may include one or more processors 909 to execute instructions to perform all or part of the steps in the above described method. Moreover, the processing component 901 may include one or more modules which facilitate the interaction between the processing component 901 and other components. For instance, the processing component 901 may include a multimedia module to facilitate the interaction between the multimedia component 904 and the processing component 901.

The storage 902 is configured to store various types of data to support the operation of the device 900. Examples of such data include instructions for any applications or methods operated on the device 900, contact data, phonebook data, messages, pictures, videos, etc. The storage 902 may be implemented using any type of volatile or non-volatile storage devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 903 provides power to various components of the device 900. The power supply component 903 may include a power supply management system, one or more power sources, and any other components associated with the generation, management, and distribution of power in the device 900.

The multimedia component 904 includes a screen providing an output interface between the device 900 and the user. In some examples, the screen may include a liquid crystal display (LCD) and a touch panel (TP). If the screen includes a touch panel, the screen may be implemented as a touchscreen to receive an input signal from a user. The touch panel includes one or more touch sensors to sense touches, swipes, and gestures on the touch panel. The touch sensor may not only sense the boundary of the touch or swipe action, but also detect the duration and pressure associated with the touch or swipe action. In some examples, the multimedia component 904 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have a focal length and an optical zoom capability.

The audio component 905 is configured to output and/or input audio signals. For example, the audio component 905 includes a microphone (MIC) configured to receive an external audio signal when the device 900 is in an operation mode, such as a call mode, a recording mode, and a voice recognition mode. The received audio signal may be further stored in the storage 902 or transmitted via the communication component 908. In some examples, the audio component 905 further includes a speaker to output audio signals.

The I/O interface 906 provides interfaces between the processing component 901 and peripheral interface modules, such as a keyboard, a click wheel, buttons, and the like. These buttons may include, but are not limited to, a home button, a volume button, a start button, and a lock button.

The sensor component 907 includes one or more sensors to provide state assessments of various aspects of the device 900. For instance, the sensor component 907 may detect an open/closed state of the device 900, relative positioning of components, e.g., the display and the keypad, of the device 900, a change in position of the device 900 or a component of the device 900, a presence or absence of user contact with the device 500, an orientation or an acceleration/deceleration of the device 900, and a change in temperature of the device 900. The sensor component 907 may also include a proximity sensor configured to detect the presence of nearby objects without any physical contact. The sensor component 907 may also include a light sensor, such as a CMOS or CCD image sensor, for use in imaging applications. In some examples, the sensor component 907 may also include an accelerometer sensor, a gyroscope sensor, a magnetic sensor, a pressure sensor, or a temperature sensor.

The communication component 908 is configured to facilitate wired or wireless communication between the device 900 and other devices. The device 900 can access a wireless network based on a communication standard, such as WiFi, 2G or 3G, 4G or 5G, or a combination thereof. In one exemplary example, the communication component 908 receives a broadcast signal or broadcast associated information from an external broadcast management system via a broadcast channel. In an exemplary example, the communication component 908 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary examples, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the touch scanning method of the above computer device.

In exemplary examples of the present disclosure, a non-transitory computer-readable storage medium including instructions, for example, the storage 902 including instructions, is further provided, which are executable by the processor 909 in the device 900, to perform the above-described method for implementing wireless frequency hopping by the communication component 908. For example, the non-transitory computer-readable storage medium may be a ROM, a random access memory (RAM), a CD-ROM, a magnetic tape, a floppy disk, an optical data storage device, or the like.

Specific examples of the present disclosure have been described above. Other examples are within the scope of the following claims. In some cases, the actions or steps described in the claims may be performed in an order different from that in the examples and the desired results may still be achieved. In addition, the processes depicted in the accompanying figures do not necessarily require the particular order shown, or sequential order, to achieve desirable results. In certain implementations, multitasking and parallel processing may also be advantageous. The technical solutions in the examples of the present disclosure will be clearly and completely described below with reference to the accompanying drawings in the examples of the present disclosure, and it is apparent that the described examples are only a part of the examples of the present disclosure rather than all of the examples. All other examples obtained by a person of ordinary skill in the art based on the examples of the present disclosure without creative efforts shall fall within the protection scope of the present disclosure.

## Claims

1. An access point device, configured to communicate with a terminal device by using wireless transmission channels, wherein the access point device comprises a first data transmission module and a first channel detection module; the wireless transmission channels comprise a first channel and a second channel, the first channel is a channel occupied by the first data transmission module, the second channel is a channel occupied by the first channel detection module, and the first channel and the second channel are channels different in frequency;
the first data transmission module is configured to: transmit service data and hop to an alternative channel in a case where interference exists on the first channel, to use the alternative channel as a new first channel, wherein whether interference exists on the first channel is determined based on: a transmission quality assessment metric of the service data of the first channel, an interfering signal, and/or a radar signal; and in a case where no interference exists on the second channel, the alternative channel is the second channel; and
the first channel detection module is configured to: monitor signals of the second channel to determine whether interference exists on the second channel, wherein in a case where the second channel is a DFS channel, the monitored signals comprise an interfering signal and a radar signal; and after the second channel is used as the new first channel, select a target channel as a new second channel to be monitored, wherein both the DFS channel and the target channel are selected based on channel quality of each channel in a channel set capable of transmitting the service data.

2. The access point device according to claim 1, wherein in a case where interference exists on the second channel, the alternative channel is a non-DFS channel selected by the first data transmission module, the selected non-DFS channel is selected from a monitoring result of the terminal device, and the monitoring result is a monitoring result for channel quality of each channel in the channel set.

3. The access point device according to claim 2, wherein the access point device further comprises a first state management module, and whether interference exists on the first channel is determined in a manner of:
determining, by the first state management module, whether interference exists on the first channel based on the transmission quality assessment metric of the service data of the first channel as well as an interfering signal of the first channel detected by the first data transmission module; and in a case where interference exists on the first channel and no interference exists on the second channel, notifying the first data transmission module that the alternative channel is the second channel, and in a case where interference exists on the second channel, notifying the first data transmission module to select an alternative channel.

4. The access point device according to claim 3, wherein whether interference exists on the first channel is further determined in a manner of: in a case where the first data transmission module detects that a radar signal exists on the first channel, determining that interference exists on the first channel.

5. The access point device according to claim 3, wherein before the first data transmission module uses the alternative channel as the new first channel, the first state management module and the first data transmission module respectively notify the terminal device of frequency hopping information carrying the alternative channel, so that the terminal device is able to transmit the service data through the new first channel; and a channel occupied by the first state management module is different in frequency from both the first channel and the second channel.

6. The access point device according to claim 1, wherein the first channel detection module determines whether interference exists on the second channel in a manner of:
in a case where the second channel is a non-DFS channel, determining whether interference exists based on a detected interfering signal; and
in a case where the second channel is a DFS channel, determining whether interference exists based on whether a radar signal is detected within a CAC period and based on the detected interfering signal.

7. The access point device according to claim 1, wherein when the access point device powers up, the first data transmission module is further configured to select a non-DFS channel as the first channel based on channel quality of each channel in the channel set.

8. A terminal device, comprising: a second data transmission module, configured to: transmit the service data with the first data transmission module through the first channel according to any one of claims 1-7; and transmit service data through a new first channel after the first channel is switched to the new first channel.

9. The terminal device according to claim 8, wherein the terminal device further comprises a second channel detection module and a second state management module; the wireless transmission channels further comprise a third channel and a fourth channel, the third channel is a channel occupied by the second state management module, the fourth channel is a channel occupied by the second channel detection module, and the fourth channel is different in frequency from both the first channel and the third channel;
the second channel detection module is configured to monitor channel quality of each channel in the channel set, and transmit a monitoring result to the access point device through the second state management module; and
the second state management module is further configured to: after receiving the frequency hopping information transmitted by the first state management module, transmit the frequency hopping information to the second data transmission module.

10. A frequency hopping method of wireless transmission channels, wherein the wireless transmission channels are configured to implement communication between an access point device and a terminal device, and the method comprises steps of:
determining, by the access point device, whether interference exists on a first channel based on: a transmission quality assessment metric of service data transmitted by the first channel, an interfering signal, and/or a radar signal;
monitoring, by the access point device, a signal on a second channel, determining whether interference exists on the second channel, and in a case where the second channel is a DFS channel, determining whether interference exists on the second channel based on an interfering signal and a radar signal detected on the second channel;
hopping to an alternative channel in a case where interference exists on the first channel, to use the alternative channel as a new first channel, and in a case where no interference exists on the second channel, the alternative channel is the second channel; and
after the second channel is used as the new first channel, selecting, by the access point device, a target channel as a new second channel to be monitored, wherein both the DFS channel and the target channel are selected based on channel quality of each channel in a channel set capable of transmitting the service data.

11. The method according to claim 10, further comprising a step of:
before the alternative channel is used as the new first channel, notifying the terminal device of frequency hopping information carrying the alternative channel respectively through the first channel and a third channel, so that the terminal device is able to transmit the service data through the new first channel; the third channel is different in frequency from both the first channel and the second channel.

12. The method according to claim 11, wherein whether interference exists on the second channel is determined in a manner of:
in a case where the second channel is a non-DFS channel, determining whether interference exists based on a detected interfering signal on the second channel; and
in a case where the second channel is a DFS channel, determining whether interference exists based on whether a radar signal is detected within a CAC period and based on the detected interfering signal.

13. The method according to claim 11, wherein when the access point device powers up, a non-DFS channel is selected as the first channel based on channel quality of each channel in the channel set.

14. The method according to claim 11, further comprising a step of: in a case where interference exists on the second channel, selecting the alternative channel from a monitoring result returned by the terminal device, wherein the selected alternative channel is a non-DFS channel, and the monitoring result is a monitoring result based on channel quality of each channel in the channel set.

15. The method according to claim 14, further comprising a step of:
monitoring, by the terminal device, channel quality of each channel in the channel set, and transmitting a monitoring result to the access point device, so that in a case where interference exists on the second channel, the access point device selects the alternative channel.

16. A computer program product comprising a computer program/instructions, wherein the computer program/instructions, when executed, implements the method according to any one of claims 10 to 15.

17. A computer-readable storage medium storing a computer program, wherein the computer program, when executed, implements the method according to any one of claims 10 to 15.
